(19) Europäisches Patentamt
European Patent Office
Office européen des brevets

(11) EP 0 695 776 A2

(12) **EUROPÄISCHE PATENTANMELDUNG**

(43) Veröffentlichungstag: **07.02.1996 Patentblatt 1996/06**

(51) Int. Cl.$^6$: **C08G 69/32**, D01F 6/80

(21) Anmeldenummer: **95104472.6**

(22) Anmeldetag: **27.03.1995**

(84) Benannte Vertragsstaaten:
**AT BE CH DE DK ES FR GB IE IT LI LU NL PT**

(30) Priorität: **06.04.1994 DE 4411755**

(71) Anmelder: **HOECHST AKTIENGESELLSCHAFT
D-65929 Frankfurt am Main (DE)**

(72) Erfinder:
- **Jung, Holger, Dr.
D-65527 Niedernhausen (DE)**
- **Neuert, Richard, Dr.
D-90610 Winkelhaid (DE)**
- **Klein, Peter, Dr.
D-65205 Wiesbaden (DE)**
- **Miess, Georg-Emerich, Dr.
D-93049 Regensburg (DE)**

(54) **Verfahren zur Herstellung von Fasern oder Filmen, danach hergestellte Fasern oder Filme**

(57) Beschrieben wird ein Verfahren zur Herstellung von Fasern oder Filmen umfassend folgende Maßnahmen:

a) Herstellen eines aromatischen Polyamids durch Polykondensation von Dicarbonsäuredihalogeniden oder deren Gemischen mit mindestens zwei Diaminen in N-Alkyllactamen oder insbesondere in N-Methylpyrrolidon als Lösungsmittel, gegebenenfalls in Gegenwart eines Salzes zur Erhöhung der Löslichkeit des aromatischen Polyamids in besagtem Lösungsmittel, wobei mindestens 90 Mol %, bezogen auf die Gesamtmenge an Dicarbonsäuredihalogeniden im Reaktionsgemisch, an Verbindungen der Formel I oder Gemischen solcher Verbindungen

$$Hal\text{-}OC\text{-}Ar^1\text{-}CO\text{-}Hal \qquad (I),$$

mit mindestens 90 Mol %, bezogen auf die Gesamtmenge an Diaminen im Reaktionsgemisch, an Verbindungen der Formel II und gegebenenfalls III oder Gemischen solcher Verbindungen polykondensiert werden

$$H_2N\text{-}Ar^2\text{-}NH_2 \qquad (II),$$

$$H_2N\text{-}Ar^3\text{-}NH_2 \qquad (III),$$

worin $Ar^1$ und $Ar^2$ unabhängig voneinander einen zweiwertigen aromatischen Rest darstellen, dessen freie Valenzen sich in para-Stellung oder in einer zu diesen Stellungen vergleichbaren parallelen oder koaxialen Stellung zueinander befinden, und $Ar^3$ einen zweiwertigen aromatischen Rest darstellt, dessen freie Valenzen sich in meta-Stellung oder in einer zu dieser Stellung vergleichbaren gewinkelten Stellung zueinander befinden, wobei der Anteil der von den Verbindungen der Formel II abgeleiteten wiederkehrenden Struktureinheiten im aromatischen Polyamid, bezogen auf den Anteil der von den Verbindungen der Formel II und III abgeleiteten wiederkehrenden Struktureinheiten, mindestens 50 Mol % beträgt, und wobei die jeweiligen dem Polymeren zugrundeliegenden Monomerbausteine so ausgewählt werden, daß sich ein in organischen Lösungsmitteln lösliches aromatisches Polyamid ergibt,

b) gegebenenfalls Lagern der Einsatz der in Schritt a) erhaltenen Reaktionslösung bei Temperaturen von 40 bis 100 °C,

c) Verpressen der in Schritt a) erhaltenen und gegebenenfalls gemäß Schritt b) gelagerten Lösung des aromatischen Polyamids durch Düsen gewünschter Querschnittsform bei Temperaturen von 40 bis 120 °C zu Fasern oder Filmen,

d) Entfernen des organischen Lösungsmittels in an sich bekannter Weise, so daß lösungsmittelärmere oder -freie Fasern oder Filme entstehen, die eine für die weitere Verarbeitung ausreichende mechanische Stabilität und Klebfreiheit aufweisen, und

e) gegebenenfalls Verstrecken der erhaltenen Fasern oder Filme in an sich bekannter Weise.

Im erfindungsgemäßen Verfahren entfällt die an sich übliche Neutralisation nach der Herstellung des aromatischen Polyamids.

Die erfindungsgemäß erhältlichen Fasern oder Filme zeichnen sich durch einen niedrigen Calcium- und/oder Lithiumgehalt aus.

EP 0 695 776 A2

## Beschreibung

Die vorliegende Erfindung betrifft ein Verfahren zur Herstellung geformter Gebilde unter Verwendung spezieller Ausformlösungen enthaltend aromatische Polyamide.

Aromatische Polyamide - auch Aramide genannt - sind bekannte faserbildendene Werkstoffe hoher Chemikalienrestistenz. Aramidfasern zeichnen sich vor allem durch gute mechanische Eigenschaften, wie hohe Festigkeiten und Moduli, aus.

Aramide werden üblicherweise durch Lösungspolykondensation von Dichloriden aromatischer Dicarbonsäuren mit aromatischen Diaminen hergestellt und entweder direkt aus der Lösung verformt oder ausgefällt und durch erneutes Auflösen in einem geeigneten Lösungsmittel in eine Ausformlösung übergeführt. Bei der Polykondensation entsteht Chlorwasserstoff, der in der Ausformstufe stört und üblicherweise durch Neutralisieren der Reaktionslösung mit einer Base gebunden wird. Üblicherweise werden der Ausformlösung Salze zur Erhöhung der Löslichkeit des Aramids zugesetzt oder solche Salze entstehen als Folge der Neutralisation der Reaktionslösung.

Es ist auch bereits versucht worden, geformte Gebilde aus aromatischen Polyamiden aus salzfreien Ausformlösungen herzustellen.

So werden in der DE-AS-2,204,075 Ausformlösungen beschrieben, die aus einem hauptsächlich aus meta-Struktureinheiten bestehendes aromatisches Polyamid und ein spezielles N-Alkyllactam als Lösungsmittel bestehen.

Ferner wird in der DE-AS-2,225,735 ein Verfahren zur Herstellung von homogenen Ausformlösungen beschrieben, worin ein hauptsächlich aus meta Struktureinheiten bestehendes aromatisches Polyamid in der Abwesenheit von Salzen in N-Methylpyrrolidon (NMP) in einem bestimmten Temperaturintervall aufgeschlämmt wird und durch Erhitzen auf ein bestimmtes Temperaturintervall in dem NMP gelöst wird.

Aus der EP-A-522,418 ist ein Verfahren zur Herstellung von lösungsgesponnenen Aramidfasern bekannt. Die konkret beschriebenen Verfahren umfassen den Einsatz von Ausformlösungen, welche durch Polykondensation von Monomeren zum Aramid und anschließend Zugabe von Neutralisationsmittel erhalten werden. Diese Ausformlösungen werden anschließend direkt versponnen.

Es besteht weiterhin der Bedarf nach Verfahren zur Herstellung geformter Gebilde, worin Ausformlösungen direkt und ohne weitere Verfahrensmaßnahmen nach der Polykondensation des Aramids in Ausformverfahren eingesetzt werden können.

Es wurde jetzt gefunden, daß bestimmte para-Aramide in speziellen Lösungsmitteln polykondensiert und ohne Neutralisationsschritt direkt in geformte Gebilde übergeführt werden können. Der Wegfall der Neutralisation bedeutet dabei eine erhebliche Erleichterung der Verfahrensführung, da eine Verfahrensstufe entfallen kann. Ferner wurde gefunden, daß nicht neutralisierte Lösungen von bestimmten para-Aramiden in bestimmten Lösungsmitteln in gewissen Temperaturintervallen stabil sind und daß diese Lösungen sich bedeutend besser filtrieren lassen als entsprechend neutralisierte Lösungen.

Die vorliegende Erfindung betrifft ein Verfahren zur Herstellung von Fasern oder Filmen umfassend folgende Maßnahmen:

a) Herstellen eines aromatischen Polyamids durch Polykondensation von Dicarbonsäuredihalogeniden oder deren Gemischen mit mindestens zwei Diaminen in N-Alkyllactamen oder insbesondere in N-Methylpyrrolidon als Lösungsmittel, gegebenenfalls in Gegenwart eines Salzes zur Erhöhung der Löslichkeit des aromatischen Polyamids in besagtem Lösungsmittel, wobei mindestens 90 Mol %, bezogen auf die Gesamtmenge an Dicarbonsäuredihalogeniden im Reaktionsgemisch, an Verbindungen der Formel I oder Gemischen solcher Verbindungen

$$\text{Hal-OC-Ar}^1\text{-CO-Hal} \qquad (I),$$

mit mindestens 90 Mol %, bezogen auf die Gesamtmenge an Diaminen im Reaktionsgemisch, an Verbindungen der Formel II und gegebenenfalls III oder Gemischen solcher Verbindungen polykondensiert werden

$$H_2N\text{-}Ar^2\text{-}NH_2 \qquad (II),$$

$$H_2N\text{-}Ar^3\text{-}NH_2 \qquad (III),$$

worin $Ar^1$ und $Ar^2$ unabhängig voneinander einen zweiwertigen aromatischen Rest darstellen, dessen freie Valenzen sich in para-Stellung oder in einer zu diesen Stellungen vergleichbaren parallelen oder koaxialen Stellung zueinander befinden, und $Ar^3$ einen zweiwertigen aromatischen Rest darstellt, dessen freie Valenzen sich in meta-Stellung oder in einer zu dieser Stellung vergleichbaren gewinkelten Stellung zueinander befinden, wobei der Anteil der von den Verbindungen der Formel II abgeleiteten wiederkehrenden Struktureinheiten im aromatischen Polyamid, bezogen auf den Anteil der von den Verbindungen der Formel II und III abgeleiteten wiederkehrenden Struktureinheiten,

mindestens 50 Mol % beträgt, und wobei die jeweiligen dem Polymeren zugrundeliegenden Monomerbausteine so ausgewählt werden, daß sich ein in organischen Lösungsmitteln lösliches aromatisches Polyamid ergibt,

b) gegebenenfalls Lagern der Einsatz der in Schritt a) erhaltenen Reaktionslösung bei Temperaturen von 40 bis 100 °C, insbesondere von 60 bis 70 °C,

c) Verpressen der in Schritt a) erhaltenen und gegebenenfalls gemäß Schritt b) gelagerten Lösung des aromatischen Polyamids durch Düsen gewünschter Querschnittsform bei Temperaturen von 40 bis 120 °C zu Fasern oder Filmen,

d) Entfernen des organischen Lösungsmittels in an sich bekannter Weise, so daß lösungsmittelärmere oder -freie Fasern oder Filme entstehen, die eine für die weitere Verarbeitung ausreichende mechanische Stabilität und Klebfreiheit aufweisen, und

e) gegebenenfalls Verstrecken der erhaltenen Fasern oder Filme in an sich bekannter Weise.

Der Begriff "Faser" ist im Rahmen dieser Erfindung in seiner breitesten Bedeutung zu verstehen; dazu zählen also zum Beispiel Endlosfasern (Filamente), wie Mono- oder Multifilamente, oder Stapelfasern oder Pulp.

Der Begriff "Film" ist im Rahmen dieser Erfindung ebenfalls in seiner breitesten Bedeutung zu verstehen; dazu zählen also zum Beispiel Ausführungsformen unterschiedlichster Stärke oder Funktion, wie Membranen, Beschichtungen oder insbesondere Folien.

Bei dem erfindungsgemäß einzusetzenden aromatischen Polyamid handelt es sich um ein Polymeres, das hauptsächlich aus zweiwertigen aromatischen para-Monomeren und/oder zweiwertigen aromatischen Monomeren aufgebaut ist, deren freie Valenzen sich in einer zur para-Stellung vergleichbaren parallelen oder koaxialen Stellung zueinander befinden.

Bei diesen aromatischen Polyamiden handelt es sich um in organischen aprotischen Lösungsmitteln löslichen Verbindungen. Unter löslichem aromatischen Polyamid ist im Rahmen dieser Erfindung ein aromatisches Polyamid zu verstehen, daß bei 25°C eine Löslichkeit in N-Methylpyrrolidon von mindestens 40 g/l aufweist.

Die Herstellung der erfindungsgemäß einzusetzenden aromatischen Polyamide erfolgt durch Lösungspolykondensation in N-Alkyllactamen oder vorzugsweise in N-Methylpyrrolidion als Lösungsmittel. Es lassen sich auch Gemische dieser Lösungsmittel einsetzen.

Unter N-Alkyllactam ist im Rahmen dieser Erfindung vorzugsweise eine Verbindung der folgenden Formel zu verstehen

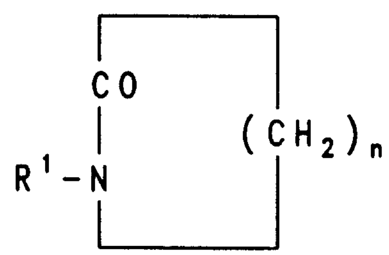

worin $R^1$ ein $C_1$-$C_4$-Alkylrest, insbesondere Methyl, ist und n eine ganze Zahl zwischen 5 und 7 bedeutet, und worin die Wasserstoffatome der Methylengruppen ganz oder teilweise durch $C_1$-$C_4$-Alkylreste ersetzt sein können.

Bei einer bevorzugten Form der Durchführung der Lösungspolykondensation werden die aromatischen monomeren Diamine in dem jeweiligen Lösungsmittel gelöst. Die so erhaltene Lösung wird dann mit der mindestens einen aromatischen monomeren Verbindung in Form eines aromatischen Dicarbonsäuredihalogenids vorzugsweise unter heftigem Umrühren gemischt, um die Polykondensation einzuleiten.

Dabei wird das Amid-Lösungsmittel nicht nur als Lösungsmittel für die aromatischen monomeren Verbindungen und das daraus erhaltene aromatische Copolyamid sondern auch als Säureakzeptor für ein Wasserstoffhalogenid verwendet, z.B. für Chlorwasserstoff, der als Nebenprodukt der Copolymerisation der aromatischen monomeren Verbindungen entsteht. In einigen Fällen kann es vorteilhaft sein, einen die Löslichkeit fördernden Zusatzstoff zu verwenden, beispielsweise ein Metallhalogenid eines der Metalle der Gruppe I oder II des periodischen Systems, welches der Polykondensationsmischung während oder nach, insbesondere jedoch vor der Polykondensation zugesetzt wird.

Beispiele für solche Zusatzstoffe sind Alkalimetallhalogenide, wie Lithiumchlorid, oder Erdalkalimetallhalogenide, wie Calciumchlorid oder Magnesiumbromid. Die Menge derartiger Zusatzstoffe beträgt üblicherweise 0,2 und 10 %, vorzugsweise zwischen 0,5 und 5 %, bezogen auf das Gesamtgewicht der Ausformlösung.

Ganz besonders bevorzugt setzt man im erfindungsgemäßen Verfahren eine Ausformlösung ein, der keine die Löslichkeit des aromatischen Polyamides fördernde Zusatzstoffe zugegeben wurden.

Die Polykondensationstemperaturen liegen bei der Lösungspolymerisation üblicherweise zwischen -20°C und + 120°C, bevorzugt zwischen + 10°C und + 100°C. Besonders gute Ergebnisse werden bei Reaktionstemperaturen zwischen + 10°C und + 80°C erzielt.

Die Summe der Konzentrationen der aromatischen monomeren Verbindungen in der Polykondensationsgemischlösung kann unter Beachtung des gewünschten Polykondensationsgrades, der gewünschten Viskosität des Polykondensationsgemisches, der Art der verwendeten aromatischen monomeren Verbindungen, der Art des verwendeten Lösungsmittels und der gewünschten Polykondensationstemperatur eingestellt werden. Die günstigste Summe der Konzentrationen kann dabei aufgrund einer Reihe von Vorversuchen für den Ablauf der Polykondensation ermittelt werden.

Polykondensationsreaktionen werden vorzugsweise so ausgeführt, daß nach Abschluß der Reaktion 2 bis 15, vorzugsweise 5 bis 10 Gew.-% an Polykondensat in der Lösung vorliegen.

Im Verlauf der Polykondensation wächst das Molekulargewicht des Polymers und damit auch die Viskosität des Reaktionsansatzes an.

Eine ausreichende Molekül-Kettenlänge ist erreicht, wenn die Viskosität der bei der Polykondensation erhaltenen Polymerlösung einer inhärenten Viskosität des Polymers von mehr als 3,0 dl/g, vorzugsweise mehr als 5,0 dl/g, insbesondere 4,5 bis 7,0 dl/g entspricht.

Unter inhärenter Viskosität wird der Ausdruck

$$\eta_{inh} = \frac{\ln \eta_{rel}}{c}$$

verstanden.

$\eta_{rel}$ bedeutet dabei die relative Viskosität, c die angewandte Konzentration in g/100 ml.

Sie wird für die Zwecke der vorliegenden Erfindung an Lösungen von jeweils 0,25 % Polymer in N-Methylpyrrolidon bei 25°C bestimmt.

Wenn die Polymerlösung die zur Weiterverarbeitung erforderliche Viskosität erreicht hat, kann die Polykondensation in üblicher Weise durch Zugabe von monofunktionellen Verbindungen, wie z.B. Acetylchlorid gestoppt werden. Bevorzugt wird die Polymerlösung ohne Zugabe von monofunktionellen Verbindungen weiterverarbeitet.

Überraschenderweise wurde gefunden, daß die erhaltene Polymerlösung in einem bestimmten Temperaturintervall stabil und lagerfähig ist und daß sich diese Lösung in diesem Temperaturintervall ohne Neutralisation des entstandenen Halogenwasserstoffs verformen läßt.

Die Erfindung betrifft auch die durch das oben beschriebene Verfahren hergestellte Ausformlösung.

Bevorzugt setzt man zur Herstellung der erfindungsgemäßen Ausformlösung die oben beschriebenen aromatischen Polyamide ein, welche ein Gewichtsmittel $M_w$ der Molekulargewichts von 80000 bis 160000, insbesondere 120000 bis 140000 aufweisen und welche einen Quotienten des Gewichts-/Zahlenmittels $M_w/M_n$ des Molekulargewichts von weniger als 4,0, insbesondere 2,0 bis 2,5 aufweisen. Die Molekulargewichtsbestimmung erfolgt dabei durch Gel-Permeationschromatographie in N-Methylpyrrolidon bei 50°C (Referenz Lichtstreuung).

Im Gegensatz zu bislang üblichen Verfahrensweisen beim Verformen der erfindungsgemäß einzusetzenden Aramide aus Lösungsmitteln erfolgt also beim erfindungsgemäßen Verfahren keine Neutralisation des entstandenen und salzartig an das Amidlösungsmittel gebundenen Halogenwasserstoffs durch Zugabe basischer Substanzen, wie Lithiumhydroxyd, Calciumhydroxyd oder Calciumoxid.

Im erfindungsgemäßen Verfahren bleibt das Aramid, weil es in dem Lösungsmittel für die Polykondensation hervorragend löslich ist, in diesem vollständig gelöst. Daher wird das bei der Polykondensation erhaltene Gemisch direkt als Ausformlösung für die Herstellung von Fasern oder Filmen verwendet.

Nach der Polykondensation kann die Reaktionslösung entweder direkt als Ausformlösung eingesetzt werden. Vorzugsweise wird die Reaktionslösung vor dem weiteren Einsatz filtriert, um eventuell noch vorhandene Grobteilchen und/oder Gelteilchen des Aramids zu entfernen. Überraschenderweise wurde gefunden, daß die Filtrationszeiten der erfindungsgemäß einzusetzenden Ausformlösung deutlich kürzer sind als die Filtrationszeiten neutralisierter Lösungen.

Die Formgebung der Ausformlösung, vorzugsweise das Verspinnen einer Spinnlösung, nach dem erfindungsgemäßen Verfahren kann nach jedem geeigneten Trockenverfahren, Naßverfahren oder Trocken-Naßverfahren erfolgen. In den Fällen, in denen ein Naßverfahren angewandt wird, wird die Ausformlösung durch eine Ausformdüse in eine koagulierende Flüssigkeit extrudiert. Dabei ist es gewöhnlich vorteilhaft, wenn die Koagulationsflüssigkeit aus Wasser oder aus einer wäßrigen, ein polares aprotisches organisches Lösungsmittel enthaltenden Lösung besteht. Dabei kann das polare aprotische organische Lösungsmittel unter denselben Amid-Lösungsmitteln ausgewählt werden, die gewöhnlich für das Lösen des aromatischen Polyamids verwendet werden.

Als polares aprotisches organisches Lösungsmittel wird in der Koagulationsflüssigkeit vorzugsweise dasselbe Lösungsmittel verwendet, welches in der Ausformlösung enthalten ist. Die Koagulationsflüssigkeit wird vorzugsweise

bei einer Temperatur zwischen 0°C und der Siedetemperatur der Koagulationsflüssigkeit bei Atmosphärendruck eingesetzt.

Das polare aprotische organische Lösungsmittel liegt in der Koagulationsflüssigkeit vorzugsweise in einer Konzentration zwischen 70 Gew.-% und weniger vor, insbesondere weniger als 50 Gew.-%.

Bei der Herstellung von Filmen oder Fasern aus dem aromatischen Polyamid wird die Ausformlösung durch einen Düsenkopf mit einer oder mehreren Ausformöffnungen extrudiert, wobei die filament- oder filmförmigen Ströme der Ausformlösung in einer der oben angegebenen Koagulationsflüssigkeiten verfestigt werden (Naßverfahren) oder in einer die Verdampfung fördernden Atmosphäre (Trockenverfahren). Eine ebenfalls geeignete Variante ist das sogenannte "Trockendüsen-Naßspinnverfahren", wie es z.B. in der US-A-3,414,645 beschrieben ist.

Das Verpressen der Ausformlösung erfolgt im Temperaturbereich von 40 bis 120 °C, vorzugsweise 60 bis 110 °C.

Für das Spinnen kann eine übliche Horizontal- oder Vertikal-Naßspinnmaschine, eine Trockendüsen-Naßspinnmaschine, oder eine Spinnmaschine verwendet werden, in der der Materialfluß unter Spannung nach unten erfolgt. Bei der Auswahl der Werkstoffe der mit der Ausformlösung in Kontakt tretenden Teile der Ausformvorrichtung ist darauf zu achten, daß eine möglichst geringe Korrosion auftritt.

Die Größe der Düsenbohrungen der Spinndüse ist dabei so zu wählen, daß sich ein Film mit dem gewünschten Flächengewicht bzw. ein Filament des gewünschten Titers ergibt.

Üblicherweise setzt man Spinndüsen mit Düsenlochdurchmessern von 0,05 bis 1,0 mm ein. Diese Spinndüsen können einzelne Düsenlöcher (Herstellung von Monofilamenten) oder auch mehrere Düsenlöcher (Herstellung von Multifilamenten) aufweisen.

Bei Schritt d) kann es sich um ein Verdampfen des Lösungsmittels unter Anwendung erhöhter Temperatur handeln, so daß ein lösungsmittelärmeres geformtes Gebilde entsteht, das eine für die weitere Verarbeitung ausreichende mechanische Stabilität und Klebfreiheit aufweist (Trockenformverfahren).

Vorzugsweise handelt es sich bei Schritt d) um ein Einbringen des primären geformten Gebildes in ein Bad enthaltend eine Koagulationsflüssigkeit, so daß das organische Lösungsmittel aus besagtem primärem geformten Gebilde entfernt wird und das gewünschte geformte Gebilde durch Koagulation des Primärgebildes entsteht, das eine für die weitere Verarbeitung ausreichende mechanische Stabilität aufweist (Naßformverfahren).

Das Einbringen kann durch direktes Extrudieren in eine Koagulationsflüssigkeit erfolgen oder durch das Extrudieren in eine Koagulationsflüssigkeit nach Durchlaufen eines Luftspaltes vorbestimmter Länge.

Beim Naßformen eines aromatischen Polyamids gemäß der Erfindung erfolgt die Koagulation vorzugsweise unter Verwendung einer Koagulationsflüssigkeit mit Zusatzstoff zur Koagulationsförderung, wobei sich an diese Koagulation ein weiterer Koagulationsschritt anschließt, in dessen Verlauf die koagulierenden Filme oder Filamente des aromatischen Polyamids in ein Wasserbad eingeleitet werden, welches auf einer Temperatur zwischen 0 und 100°C gehalten wird.

Der zusätzliche Koagulationsschritt dient dabei zur Vervollständigung der Koagulation durch Entfernen des Lösungsmittels. Außerdem werden Zusatzstoffe zur Koagulationsförderung, falls solche Stoffe verwendet werden, aus den koagulierten Filmen oder Filamenten ausgewaschen.

Aus der vorstehenden Beschreibung wird deutlich, daß das erfindungsgemäße Verfahren unter Verwendung üblicher Ausformvorrichtungen durchgeführt werden kann, ohne daß ein gefährliches oder schädliches Lösungsmittel, wie z.B. konzentrierte Schwefelsäure, verwendet werden müßte. Hierdurch werden die Gefahren für das Bedienungspersonal verringert.

Die erfindungsgemäß hergestellten Filme oder Filamente werden gewöhnlich einem Streckvorgang unterworfen, durch den nicht nur die mechanischen Eigenschaften, wie z.B. die Zugfestigkeit und der Elastizitätsmodul, gefördert werden sondern auch die thermischen Eigenschaften, wie z.B. die thermische Stabilität der so hergestellten Fasern.

Filamente werden in der Regel verstreckt, um eine hohe mechanische Festigkeit und einen hohen Elastizitätsmodul zu erzielen. Das Verstreckungsverhältnis beträgt dabei üblicherweise etwa 1:6 bis 1:20. Die Verstrecktemperatur liegt dabei in der Regel zwischen 250 und 550°C, vorzugsweise zwischen 300 und 480°C.

Das Strecken kann in einem einzigen Schritt, in zwei Schritten oder in mehreren Schritten ausgeführt werden, wobei zum Aufheizen eine Heizplatte oder eine zylindrische Heizvorrichtung verwendet werden kann. Außerdem können die gestreckten Filamente einer weiteren Wärmebehandlung bei gleicher oder höherer Temperatur unterworfen werden, um ihre kristalline Struktur zu fördern.

Im erfindungsgemäßen Verfahren kann eine an sich übliche Verstreckpräparation zur Anwendung kommen.

Es hat sich herausgestellt, daß die erfindungsgemäß erhaltenen Filme oder Fasern aus aromatischen Polyamiden einen überraschend niedrigen Gehalt an Calcium- oder Lithiumionen aufweisen, insbesondere dann, wenn das Verfahren in Abwesenheit irgendwelcher Löslichkeitsvermittler, wie Calciumchlorid oder Lithiumchlorid, durchgeführt wird.

Die Erfindung betrifft daher auch Fasern und Filme aus in organischen Lösungsmitteln löslichen aromatischen Polyamiden enthaltend mindestens 90 Mol %, bezogen auf das aromatische Polyamid, an wiederkehrenden Struktureinheiten der Formeln VIII oder der Formeln VIII und IX

$$-OC-Ar^1-CO-NH-Ar^2-NH- \qquad (VIII),$$

$$-OC-Ar^1-CO-NH-Ar^3-NH- \quad (IX),$$

worin $Ar^1$, $Ar^2$ und $Ar^3$ die weiter oben definierte Bedeutung besitzen, und worin die Fasern oder Filme einen Gehalt an Calciumverbindungen oder an Lithiumverbindungen oder an Calcium- und Lithiumverbindungen von jeweils unter 100 ppm, bezogen auf die Trockenmasse des aromatischen Polyamids, aufweisen.

Die Bestimmung des Gehalts an Calcium- bzw. Lithiumverbindungen kann dabei anhand der Bogen-Emissionsspektroskopie vorgenommen werden oder gegebenenfalls auch nach der Methode der Röntgenfluoreszenzspektroskopie.

Im erfindungsgemäßen Verfahren werden vorzugsweise aromatische Polyamide eingesetzt, die durch Polykondensation von Dicarbonsäuredihalogeniden der oben definierten Formel I oder von Mischungen solcher Verbindungen mit aromatischen Diaminen der Formel IV und VII oder IV und V oder IV, V und VI oder IV und VII oder IV, V und VII erhältlich sind

$$H_2N-Ar^4-NH_2 \quad (IV),$$

$$H_2N-Ar^5-X-Ar^6-NH_2 \quad (V),$$

$$H_2N-Ar^7-Y-Ar^8-NH_2 \quad (VI),$$

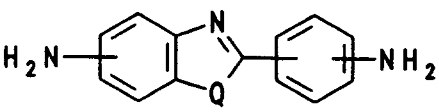 (VII),

worin $Ar^4$ ein zweiwertiger aromatischer Rest ist, dessen freie Valenzen sich in para-Stellung oder in einer zu dieser Stellung vergleichbaren parallelen oder koaxialen Stellung zueinander befinden, insbesondere ein aromatischer einkerniger oder kondensierter zweikerniger Rest ist,
$Ar^5$ und $Ar^6$ unabhängig voneinander einen zweiwertigen aromatischen Rest darstellen, dessen freie Valenzen sich in para-Stellung oder in einer zu dieser Stellung vergleichbaren parallelen oder koaxialen Stellung zueinander befinden, oder worin $Ar^6$ zusätzlich einen zweiwertigen aromatischen Rest darstellt, dessen freie Valenzen sich in meta-Stellung oder in einer zu dieser Stellung vergleichbaren gewinkelten Stellung zueinander befinden,
X eine direkte C-C-Bindung oder eine Gruppe der Formel -O-, -S-, $-SO_2-$, -O-Phenylen-O- oder Alkylen ist,
$Ar^7$ und $Ar^8$ eine der für $Ar^5$ und $Ar^6$ definierten Bedeutungen annimmt,
Y eine der für X definierten Bedeutungen annimmt oder zusätzlich eine Gruppe der Formel -HN-CO- bedeuten kann, und
Q ein Gruppe der Formel -O-, -S- oder insbesondere $-NR^2-$ bedeutet, worin $R^2$ Alkyl, Cycloalkyl, Aryl, Aralkyl oder insbesondere Wasserstoff ist.

Dabei ist die Gesamtmenge der jeweiligen dem Polymeren zugrundeliegenden Monomerbausteine so auszuwählen, daß sich ein in organischen Lösungsmitteln lösliches und vorzugsweise isotrope Lösungen bildendes aromatisches Polyamid ergibt.

Bedeuten irgendwelche Reste zweiwertige aromatische Reste, deren Valenzbindungen sich in para- oder in vergleichbarer koaxialer oder paralleler Position zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über -CO-NH- Gruppen linear miteinander verbunden sein.

Die Valenzbindungen, die in koaxialer oder parallel zueinander befindlicher Stellung stehen, sind entgegengesetzt gerichtet. Ein Beispiel für koaxiale, entgegengesetzt gerichtete Bindungen sind die Biphenyl-4,4'-en-Bindungen. Ein Beispiel für parallel, entgegegesetzt gerichtete Bindungen sind die Naphthalin-1,5- oder -2,6-Bindungen, während die Naphthalin-1,8-Bindungen parallel gleichgerichtet sind.

Beispiele für bevorzugte zweiwertige aromatische Reste, deren Valenzbindungen sich in para- oder in vergleichbarer koaxialer oder paralleler Position zueinander befinden, sind einkernige aromatische Reste mit zueinander para-ständigen freien Valenzen, insbesondere 1,4-Phenylen oder zweikernige kondensierte aromatische Reste mit parallelen, entgegengesetzt gerichteten Bindungen, insbesondere 1,4-, 1,5- und 2,6-Naphthylen, oder zweikernige über eine C-C

Bindung verknüpfte aromatische Reste mit koaxialen, entgegengesetzt gerichteten Bindungen, insbesondere 4,4'-Biphenylen.

Bedeuten irgendwelche Reste zweiwertige aromatische Reste, deren Valenzbindungen sich in meta- oder in vergleichbarer gewinkelter Position zueinander befinden, so handelt es sich dabei um ein- oder mehrkernige aromatische Kohlenwasserstoffreste oder um heterocyclisch-aromatische Reste, die ein- oder mehrkernig sein können. Im Falle von heterocyclisch-aromatischen Resten weisen diese insbesondere ein oder zwei Sauerstoff-, Stickstoff- oder Schwefelatome im aromatischen Kern auf.

Mehrkernige aromatische Reste können miteinander kondensiert sein oder über C-C-Bindungen oder über Brükkengruppen, wie z.B. -O-, $-CH_2-$, -S-, -CO- oder $-SO_2-$ miteinander verbunden sein.

Beispiele für bevorzugte zweiwertige aromatische Reste, deren Valenzbindungen sich in meta- oder in vergleichbarer gewinkelter Position zueinander befinden, sind einkernige aromatische Reste mit zueinander meta-ständigen freien Valenzen, insbesondere 1,3-Phenylen oder zweikernige kondensierte aromatische Reste mit zueinander gewinkelt gerichteten Bindungen, insbesondere 1,6- und 2,7-Naphthylen, oder zweikernige über eine C-C Bindung verknüpfte aromatische Reste mit zueinander gewinkelt gerichteten Bindungen, insbesondere 3,4'-Biphenylen.

Im erfindungsgemäßen Verfahren können neben Mischungen von Dicarbonsäuredihalogeniden der oben definierten Formel I als auch Mischungen von aromatischen Diaminen der Formel II oder Mischungen von aromatischen Diaminen der Formel III zum Einsatz kommen. Ein Beispiel für den Einsatz von Mischungen von Diaminen der Formel II ist das weiter oben beschriebenen Verfahren, worin Diamine der Formeln IV, V und VI zu Einsatz kommen. Neben Dreiergemischen von aromatischen Diaminen sind aber auch Systeme mit noch mehr Diaminkomponenten möglich, beispielsweise Systeme, die auf dem Einsatz von vier oder fünf verschiedenen aromatischen Diaminen beruhen.

Geringere Anteile, beispielsweise bis zu 10 Mol % der Monomereinheiten, bezogen auf das Polymere, können aliphatischer oder cycloaliphatischer Natur sein, beispielsweise Alkylen- oder Cycloalkyleneinheiten darstellen.

Unter Alkylenresten ist verzweigtes und insbesondere geradkettiges Alkylen zu verstehen, beispielsweise Alkylen mit zwei bis vier Kohlenstoffatomen, insbesondere Ethylen.

Unter Cycloalkylenresten sind beispielsweise Reste mit fünf bis acht Kohlenstoffatomen zu verstehen, insbesondere Cycloalkylen.

Alle diese aliphatischen, cycloaliphatischen oder aromatischen Reste können mit inerten Gruppen substituiert sein. Darunter sind Substituenten zu verstehen, die die ins Auge gefaßte Anwendung nicht negativ beeinflussen.

Beispiele für solche Substituenten sind Alkyl, Alkoxy oder Halogen.

Unter Alkylresten ist verzweigtes und insbesondere geradkettiges Alkyl zu verstehen, beispielsweise Alkyl mit ein bis sechs Kohlenstoffatomen, insbesondere Methyl.

Unter Alkoxyresten ist verzweigtes und insbesondere geradkettiges Alkoxy zu verstehen, beispielsweise Alkoxy mit ein bis sechs Kohlenstoffatomen, insbesondere Methoxy.

Bedeuten irgendwelche Reste Halogen, so handelt es sich dabei beispielsweise um Fluor, Brom oder insbesondere um Chlor.

Bevorzugt verwendet man aromatische Polyamide auf der Basis von unsubstituierten Resten.

$Ar^1$, $Ar^2$, $Ar^4$, $Ar^5$, $Ar^6$, $Ar^7$ und $Ar^8$ bedeuten vorzugsweise 1,4-Phenylen.

$Ar^5$, $Ar^6$, $Ar^7$ und $Ar^8$ bedeuten ferner jeweils 1,4-Phenylen, das mit einem gegenüber Carbonsäurechloriden inerten Rest, wie Alkyl, insbesondere Methyl, Alkoxy, insbesondere Methoxy oder Halogen, insbesondere Chlor, substituiert ist.

$Ar^6$ und $Ar^8$ bedeuten darüber hinaus auch vorzugsweise 1,3-Phenylen.

$Ar^3$ bedeutet vorzugsweise 3,4'-Diaminodiphenylether.

X und Y bedeuten vorzugsweise -O- oder -O-1,4-Phenylen-O- sowie eine direkte C-C-Bindung.

Q ist besonders bevorzugt -NH-.

Beispiele für bevorzugte Diaminkombinationen, die den bevorzugt eingesetzten aromatischen Polyamiden enthaltend die wiederkehrenden Struktureinheiten abgeleitet von Diaminen der Formeln IV und VII oder IV und V oder IV, V und VI oder IV, V und VII zugrundeliegen, sind 1,4-Phenylendiamin, 4,4'-Diaminodiphenylmethan und 3,3'-Dichlor-, 3,3'-Dimethyl- oder 3,3'-Dimethoxybenzidin; sowie 1,4-Phenylendiamin, 1,4-Bis-(4-aminophenoxy)-benzol und 3,3'-Dichlor-, 3,3'-Dimethyl- oder 3,3'-Dimethoxybenzidin; sowie 1,4-Phenylendiamin, 3,4'-Diaminodiphenylether und 3,3'-Dichlor-, 3,3'-Dimethyl- oder 3,3'-Dimethoxybenzidin; sowie 1,4-Phenylendiamin, 3,4'-Diaminodiphenylether und 4,4'-Diaminobenzanilid; sowie 1,4-Phenylendiamin, 1,4-Bis-(4-aminophenoxy)-benzol und 3,4'-Diaminodiphenylether; sowie 1,4-Phenylendiamin und Diamino-2-phenyl-benzimidazol; sowie 1,4-Phenylendiamin, Diamino-2-phenyl-benzimidazol und 3,3'-Dichlor-, 3,3'-Dimethyl- oder 3,3'-Dimethoxybenzidin; sowie 1,4-Phenylendiamin, Diamino-2-phenyl-benzimidazol und 3,4'-Diaminodiphenylether; sowie 3,3'-Dichlor-, 3,3'-Dimethyl- oder 3,3'-Dimethoxybenzidin, Diamino-2-phenyl-benzimidazol und 1,4-Bis-(4-aminophenoxy)-benzol; sowie Diamino-2-phenyl-benzimidazol, 3,3'-Dichlor-, 3,3'-Dimethyl- oder 3,3'-Dimethoxybenzidin und 3,4'-Diaminodiphenylether; sowie 1,4-Phenylendiamin, Diamino-2-phenyl-benzimidazol und 1,4-Bis-(4-aminophenoxy)-benzol.

Aramide, die sich von solchen Diaminkombinationen ableiten und die sich bevorzugt gemäß der vorliegenden Erfindung einsetzen lassen, sind teilweise in den EP-A-199,090, EP-A-364,891, EP-A-364,892, EP-A-364,893 und EP-A-424,860 beschrieben.

Die erfindungsgemäß erhaltenen Fasern weisen vorzugsweise Einzelfilamenttiter von 1 bis 50 dtex, insbesondere von 1 bis 30 dtex, auf.

Die Zugfestigkeit der erfindungsgemäß erhaltenen Fasern beträgt vorzugsweise 130 bis 290 cN/tex, insbesondere 190 bis 250 cN/tex.

Der Anfangsmodul, bezogen auf 100 % Dehnung, der erfindungsgemäß erhaltenen Fasern beträgt vorzugsweise 30 bis 80 N/tex.

Die Querschnittsform der Einzelfilamente der erfindungsgemäß erhaltenen Fasern kann beliebig sein, beispielsweise dreieckig, tri- oder multilobal oder insbesondere elliptisch oder rund.

Die erfindungsgemäß erhaltenen Fasern, welche hervorragende mechanische und thermische Eigenschaften besitzen und sich durch eine hohe Verstreckbarkeit auszeichnen, können auf die verschiedenste Weise industriell eingesetzt werden, beispielsweise als Verstärkungsmaterialien, wie für die Verstärkung von Gummiartikeln und insbesondere für die Verstärkung von hydraulisch abbindenden Materialien, als wärmebeständige Isolationsmaterialien, zur Herstellung von Filtergeweben und als Dämmstoffe.

Die folgenden Beispiele erläutern die Erfindung ohne diese zu begrenzen.

Beispiel 1

Aromatisches Copolyamid aus 100 mol % Terephthalsäuredichlorid (TPC), 50 mol % para-Phenylendiamin (PPD), 25 mol % 1,4-Bis-(4-aminophenyloxy)-benzol (BAPOB) und 25 mol % 3,4'-Diaminodiphenylether (DADPE)

162,2 g (1,5 mol) PPD, 150,2 g (0,75 mol) DADPE und 219,3 g (0,75 mol) BAPOB wurden unter Stickstoff in 14042 g N-Methylpyrrolidon (NMP) gelöst und zwischen 35 und 55 °C innerhalb von 20 Minuten mit 587 g (2,9 mol) TPC versetzt. Die gewünschte Viskosität wurde durch Zugabe der Restmenge von 10,3 g (0,1 mol) TPC in kleinen Schritten eingestellt und belief sich dann auf eine inhärente Viskosität von 5,5 dl/g. Die Lösung wurde ohne Zugabe eines Neutralisationsmittels, wie Calciumoxid, filtriert, entgast und naß versponnen. Dazu wurde sie aus einer Düse mit 100 Öffnungen von jeweils 0,10 mm Durchmesser in ein Koagulationsbad, bestehend aus einer 80°C warmen Lösung von 35 % NMP in Wasser mit einer Geschwindigkeit von 16 m/min ausgesponnen. Die erhaltenen Fäden wurden durch zwei Wasserbäder, eine Waschmaschine, über eine Trockengalette und schließlich über Bügeleisen der Temperaturen von 400 bis 440°C auf das 11-fache verstreckt.

Der Einzelfilamenttiter betrug 1,8 dtex bei einer feinheitsbezogenen Festigkeit von 195 cN/tex, einer Dehnung von 4,3 % und einem Anfangsmodul von 43 N/tex, bezogen auf 100 % Dehnung.

Beispiele 2 bis 15

Analog zur Herstellungsvorschrift wurden weitere Aramide hergestellt und naß versponnen. Die chemische Zusammensetzung der hergestellten Aramide, die Herstellungs- und Verarbeitungsbedingungen und die Eigenschaften der erhaltenen Fäden sind in der folgenden Tabelle aufgeführt. Dabei werden für die eingesetzten Monomere folgende Abkürzungen verwendet:

| | |
|---|---|
| TPC | Terephthalsäuredichlorid |
| PPD | para-Phenylendiamin |
| DADPE | 3,4'-Diaminodiphenylether |
| BAPOB | 1,4-Bis-(3-aminophenyloxy)-benzol |
| DMB | 3,3'-Dimethylbenzidin |
| DABI | 5(6)-Amino-2-(p-aminophenyl)-benzimidazol |

Tabelle

| Beispiel | 2 | 3 | 4 | 5 | 6 | 7 | 8 |
|---|---|---|---|---|---|---|---|
| TPC (mol%) | 100 | 100 | 100 | 100 | 100 | 100 | 100 |
| PPD (mol%) | 50 | 45 | 47 | 30 | 20 | 25 | 40 |
| DADPE (mol%) | 35 | 39 | 38 | 10 | 20 | - | - |
| BAPOB (mol%) | 15 | 16 | 15 | - | - | 25 | - |
| DMB (mol%) | - | - | - | 60 | 60 | 50 | - |
| DABI (mol%) | - | - | - | - | - | - | 60 |
| Konzentration Spinnlösung (Gew.%) | 8 | 10 | 10 | 6 | 6 | 6 | 4 |
| inh. Viskosität (dl/g) | 6,0 | 4,7 | 4,25 | 5,4 | 5,7 | 6,8 | 4,3 |
| Gesamttiter (dtex) | 1100 | 1108 | 1103 | 180 | 175 | 1100 | 160 |
| Reißfestigkeit (cN/tex) | 260 | 235 | 223 | 175 | 195 | 235 | 130 |
| E-Modul (N/tex) | 50 | 47 | 45 | 94 | 79 | 64 | 105 |
| Reißdehnung (%) | 4,5 | 4,2 | 4,1 | 1,8 | 2,3 | 3,4 | 2,1 |
| Verstreckung 1: | 18 | 15 | 12 | 6 | 8 | 13 | 3 |

| Beispiel | 9 | 10 | 11 | 12 | 13 | 14 | 15 |
|---|---|---|---|---|---|---|---|
| TPC (mol%) | 100 | 100 | 100 | 100 | 100 | 100 | 100 |
| PPD (mol%) | 40 | 30 | 30 | - | - | 50 | 25 |
| DADPE (mol%) | 20 | 30 | 10 | - | 20 | - | - |
| BAPOB (mol%) | - | - | - | - | 10 | 25 | 25 |
| DMB (mol%) | - | - | - | 40 | - | - | - |
| DABI (mol%) | 40 | 40 | 60 | 60 | 70 | 25 | 50 |
| Konzentration Spinnlösung (Gew.%) | 6 | 6 | 6 | 5 | 6 | 6 | 6 |

| | | | | | | | |
|---|---|---|---|---|---|---|---|
| inh. Viskosität (dl/g) | 5,5 | 5,8 | 5,1 | 4,2 | 5,6 | 6,3 | 6,1 |
| Gesamttiter (dtex) | | 550 | 550 | 550 | 180 | 180 | 180 |
| Reißfestigkeit (cN/tex) | 210 | 250 | 210 | 224 | 210 | 230 | 215 |
| E-Modul (N/tex) | 85 | 76 | 85 | 99 | 66 | 68 | 50 |
| Reißdehnung (%) | 3,4 | 4,5 | 3,8 | 3,5 | 3,9 | 3,4 | 3,9 |
| Verstreckung 1: | 11 | 13 | 8 | 7 | 10 | 7 | 9 |

**Patentansprüche**

1. Die vorliegende Erfindung betrifft ein Verfahren zur Herstellung von Fasern oder Filmen umfassend folgende Maßnahmen:

a) Herstellen eines aromatischen Polyamids durch Polykondensation von Dicarbonsäuredihalogeniden oder deren Gemischen mit mindestens zwei Diaminen in N-Alkyllactamen oder insbesondere in N-Methylpyrrolidon als Lösungsmittel, gegebenenfalls in Gegenwart eines Salzes zur Erhöhung der Löslichkeit des aromatischen Polyamids in besagtem Lösungsmittel, wobei mindestens 90 Mol %, bezogen auf die Gesamtmenge an Dicarbonsäuredihalogeniden im Reaktionsgemisch, an Verbindungen der Formel I oder Gemischen solcher Verbindungen

$$Hal\text{-}OC\text{-}Ar^1\text{-}CO\text{-}Hal \qquad (I),$$

mit mindestens 90 Mol %, bezogen auf die Gesamtmenge an Diaminen im Reaktionsgemisch, an Verbindungen der Formel II und gegebenenfalls III oder Gemischen solcher Verbindungen polykondensiert werden

$$H_2N\text{-}Ar^2\text{-}NH_2 \qquad (II),$$

$$H_2N\text{-}Ar^3\text{-}NH_2 \qquad (III),$$

worin $Ar^1$ und $Ar^2$ unabhängig voneinander einen zweiwertigen aromatischen Rest darstellen, dessen freie Valenzen sich in para-Stellung oder in einer zu diesen Stellungen vergleichbaren parallelen oder koaxialen Stellung zueinander befinden, und $Ar^3$ einen zweiwertigen aromatischen Rest darstellt, dessen freie Valenzen sich in meta-Stellung oder in einer zu dieser Stellung vergleichbaren gewinkelten Stellung zueinander befinden, wobei der Anteil der von den Verbindungen der Formel II abgeleiteten wiederkehrenden Struktureinheiten im aromatischen Polyamid, bezogen auf den Anteil der von den Verbindungen der Formel II und III abgeleiteten wiederkehrenden Struktureinheiten, mindestens 50 Mol % beträgt, und wobei die jeweiligen dem Polymeren zugrundeliegenden Monomerbausteine so ausgewählt werden, daß sich ein in organischen Lösungsmitteln lösliches aromatisches Polyamid ergibt,

b) gegebenenfalls Lagern der Einsatz der in Schritt a) erhaltenen Reaktionslösung bei Temperaturen von 40 bis 100 °C, insbesondere von 60 bis 70 °C,

c) Verpressen der in Schritt a) erhaltenen und gegebenenfalls gemäß Schritt b) gelagerten Lösung des aromatischen Polyamids durch Düsen gewünschter Querschnittsform bei Temperaturen von 40 bis 120 °C zu Fasern oder Filmen,

d) Entfernen des organischen Lösungsmittels in an sich bekannter Weise, so daß lösungsmittelärmere oder -freie Fasern oder Filme entstehen, die eine für die weitere Verarbeitung ausreichende mechanische Stabilität und Klebfreiheit aufweisen, und

e) gegebenenfalls Verstrecken der erhaltenen Fasern oder Filme in an sich bekannter Weise.

2. Verfahren nach Anspruch 1, dadurch gekennzeichnet, daß das aromatische Polyamid ein Gewichtsmittel $M_w$ des Molekulargewichts von 80000 bis 160000 und einen Quotienten des Gewichtsmittels zum Zahlenmittel des Molekulargewichts $M_w/M_n$ von kleiner gleich 4,0 aufweist.

3. Verfahren nach Anspruch 1, dadurch gekennzeichnet, daß die Herstellung des aromatischen Polyamids in Schritt a) durch Lösen der aromatischen monomeren Diamine in dem jeweiligen Lösungsmittel und anschließender Mischung der so erhaltenen Lösung mit mindestens einem aromatischen Dicarbonsäuredihalogenid erfolgt.

4. Verfahren nach Anspruch 1, dadurch gekennzeichnet, daß die Polykondensation bei Temperaturen zwischen + 10°C und +80°C durchgeführt wird.

5. Verfahren nach Anspruch 1, dadurch gekennzeichnet, daß in Schritt d) eine Ausformlösung eingesetzt wird, der keine die Löslichkeit des aromatischen Polyamides fördernde Zusatzstoffe zugegeben wurden.

6. Verfahren nach Anspruch 1, dadurch gekennzeichnet, daß in Schritt d) eine Ausformlösung eingesetzt wird, die 2 bis 15 Gew.-% an aromatischem Polyamid, bezogen auf die Ausformlösung, enthält.

7. Verfahren nach Anspruch 1, dadurch gekennzeichnet, daß in Schritt c) ein aromatisches Polyamid eingesetzt wird, dessen inhärente Viskosität 4,5 bis 7,0 dl/g beträgt.

8. Verfahren nach Anspruch 1, dadurch gekennzeichnet, daß $Ar^1$ und $Ar^2$ 1,4-Phenylen bedeuten und $Ar^3$ einen zweiwertigen Rest des 3,4'-Diaminodiphenylethers bedeutet.

9. Verfahren nach Anspruch 1, dadurch gekennzeichnet, daß es sich bei dem in Schritt c) eingesetzten aromatischen Polyamid um ein Polymeres handelt, das durch Polykondensation von Dicarbonsäuredihalogeniden der Formel I nach Anspruch 1 oder von Mischungen solcher Verbindungen mit aromatischen Diaminen der Formel IV und VII oder IV und V oder IV, V und VI oder IV und VII oder IV, V und VII erhältlich sind

$$H_2N\text{-}Ar^4\text{-}NH_2 \qquad (IV),$$

$$H_2N\text{-}Ar^5\text{-}X\text{-}Ar^6\text{-}NH_2 \qquad (V),$$

$$H_2N\text{-}Ar^7\text{-}Y\text{-}Ar^8\text{-}NH_2 \qquad (VI),$$

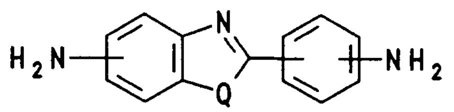 (VII),

worin $Ar^4$ ein zweiwertiger aromatischer Rest ist, dessen freie Valenzen sich in para-Stellung oder in einer zu dieser Stellung vergleichbaren parallelen oder koaxialen Stellung zueinander befinden, insbesondere ein aromatischer einkerniger oder kondensierter zweikerniger Rest ist,
$Ar^5$ und $Ar^6$ unabhängig voneinander einen zweiwertigen aromatischen Rest darstellen, dessen freie Valenzen sich in para-Stellung oder in einer zu dieser Stellung vergleichbaren parallelen oder koaxialen Stellung zueinander befinden, oder worin $Ar^6$ zusätzlich einen zweiwertigen aromatischen Rest darstellt, dessen freie Valenzen sich in meta-Stellung oder in einer zu dieser Stellung vergleichbaren gewinkelten Stellung zueinander befinden,
X eine direkte C-C-Bindung oder eine Gruppe der Formel -O-, -S-, $-SO_2-$, -O-Phenylen-O- oder Alkylen ist,
$Ar^7$ und $Ar^8$ eine der für $Ar^5$ und $Ar^6$ definierten Bedeutungen annehmen,
Y eine der für X definierten Bedeutungen annimmt oder zusätzlich eine Gruppe der Formel -HN-CO- bedeuten kann, und
Q ein Gruppe der Formel -O-, -S- oder insbesondere $-NR^2-$ bedeutet, worin $R^2$ Alkyl, Cycloalkyl, Aryl, Aralkyl oder insbesondere Wasserstoff ist.

10. Verfahren nach Anspruch 9, dadurch gekennzeichnet, daß das Diamin der Formel IV sich von 1,4-Phenylendiamin, das Diamin der Formel V sich von 4,4'-Diaminodiphenylmethan und das Diamin der Formel VI sich von 3,3'-Dichlor-, 3,3'-Dimethyl- oder 3,3'-Dimethoxybenzidin ableitet.

11. Verfahren nach Anspruch 9, dadurch gekennzeichnet, daß das Diamin der Formel IV sich von 1,4-Phenylendiamin, das Diamin der Formel V sich von 1,4-Bis-(4-aminophenoxy)-benzol und das Diamin der Formel VI sich von 3,3'-Dichlor-, 3,3'-Dimethyl- oder 3,3'-Dimethoxybenzidin ableitet.

12. Verfahren nach Anspruch 9, dadurch gekennzeichnet, daß das Diamin der Formel IV sich von 1,4-Phenylendiamin, das Diamin der Formel V sich von 3,4'-Diaminodiphenylether und das Diamin der Formel VI sich von 3,3'-Dichlor-, 3,3'-Dimethyl- oder 3,3'-Dimethoxybenzidin ableitet.

13. Verfahren nach Anspruch 9, dadurch gekennzeichnet, daß das Diamin der Formel IV sich von 1,4-Phenylendiamin, das Diamin der Formel V sich von 3,4'-Diaminodiphenylether und das Diamin der Formel VI sich von 4,4'-Diaminobenzanilid ableitet, oder daß das Diamin der Formel IV sich von 1,4-Phenylendiamin, das Diamin der Formel V sich von 1,4-Bis-(4-aminophenoxy)-benzol und das Diamin der Formel VI sich von 3,4'-Diaminodiphenylether ableitet, oder daß das Diamin der Formel IV sich von 1,4-Phenylendiamin und das Diamin der Formel VII sich von Diamino-2-phenylbenzimidazol ableitet, oder daß das Diamin der Formel IV sich von 1,4-Phenylendiamin, das Diamin der Formel V sich von 3,3'-Dichlor-, 3,3'-Dimethyl- oder 3,3'-Dimethoxybenzidin und das Diamin der Formel VII sich von Diamino-2-phenyl-benzimidazol ableitet, oder daß das Diamin der Formel IV sich von 1,4-Phenylendiamin, das Diamin der Formel V sich von 3,4'-Diaminodiphenylether und das Diamin der Formel VII sich von Diamino-2-phenylbenzimidazol ableitet, oder daß das Diamin der Formel IV sich von 3,3'-Dichlor-, 3,3'-Dimethyl- oder 3,3'-Dimethoxybenzidin, das Diamin der Formel V sich von 1,4-Bis-(4-aminophenoxy)-benzol und das Diamin der Formel VII sich von Diamino-2-phenyl-benzimidazol ableitet, oder daß das Diamin der Formel IV sich von 3,3'-Dichlor-, 3,3'-Dimethyl- oder 3,3'-Dimethoxybenzidin, das Diamin der Formel V sich von 3,4'-Diaminodiphenylether und das Diamin der Formel VII sich von Diamino-2-phenyl-benzimidazol ableitet, oder daß das Diamin der Formel IV sich von para-Phenylendiamin, das Diamin der Formel V sich von 1,4-Bis-(4-aminophenoxy)-benzolund das Diamin der Formel VII sich von Diamino-2-phenyl-benzimidazol ableitet.

14. Ausformlösung zur Herstellung von Fasern oder Filmen erhältlich durch Polykondensation von Dicarbonsäuredihalogeniden oder deren Gemischen mit mindestens zwei Diaminen in N-Alkyllactamen oder insbesondere in N-Methylpyrrolidon als Lösungsmittel, zu einem aromatischen Polyamid, gegebenenfalls in Gegenwart eines Salzes zur Erhöhung der Löslichkeit des aromatischen Polyamids in besagtem Lösungsmittel, wobei mindestens 90 Mol %, bezogen auf die Gesamtmenge an Dicarbonsäuredihalogeniden im Reaktionsgemisch, an Verbindungen der Formel I oder Gemischen solcher Verbindungen

$$\text{Hal-OC-Ar}^1\text{-CO-Hal} \qquad (I),$$

mit mindestens 90 Mol %, bezogen auf die Gesamtmenge an Diaminen im Reaktionsgemisch, an Verbindungen der Formel II und gegebenenfalls III oder Gemischen solcher Verbindungen polykondensiert werden

$$H_2N\text{-Ar}^2\text{-}NH_2 \qquad (II),$$

$$H_2N\text{-Ar}^3\text{-}NH_2 \qquad (III),$$

worin $Ar^1$ und $Ar^2$ unabhängig voneinander einen zweiwertigen aromatischen Rest darstellen, dessen freie Valenzen sich in para-Stellung oder in einer zu diesen Stellungen vergleichbaren parallelen oder koaxialen Stellung zueinander befinden, und $Ar^3$ einen zweiwertigen ein- oder mehrkernigen aromatischen Rest darstellt, dessen freie Valenzen sich in meta-Stellung oder in einer zu dieser Stellung vergleichbaren gewinkelten Stellung zueinander befinden, wobei der Anteil der von den Verbindungen der Formel II abgeleiteten wiederkehrenden Struktureinheiten im aromatischen Polyamid, bezogen auf den Anteil der von den Verbindungen der Formel II und III abgeleiteten wiederkehrenden Struktureinheiten, mindestens 50 Mol % beträgt, und wobei die jeweiligen dem Polymeren zugrundeliegenden Monomerbausteine so ausgewählt werden, daß sich ein in organischen Lösungsmitteln lösliches aromatisches Polyamid ergibt.

15. Fasern und Filme aus in organischen Lösungsmitteln löslichen aromatischen Polyamiden enthaltend mindestens 90 Mol %, bezogen auf das aromatische Polyamid, an wiederkehrenden Struktureinheiten der Formeln VIII oder der Formeln VIII und IX

$$\text{-OC-Ar}^1\text{-CO-NH-Ar}^2\text{-NH-} \qquad (VIII),$$

$$\text{-OC-Ar}^1\text{-CO-NH-Ar}^3\text{-NH-} \qquad (IX),$$

worin $Ar^1$, $Ar^2$ und $Ar^3$ die in Anspruch 1 definierte Bedeutung besitzen, dadurch gekennzeichnet, daß die Fasern oder Filme einen Gehalt an Calciumverbindungen oder an Lithiumverbindungen oder an Calcium- und Lithiumverbindungen von jeweils unter 100 ppm, bezogen auf die Trockenmasse des aromatischen Polyamids enthalten.

**16.** Fasern und Filme nach Anspruch 15, dadurch gekennzeichnet, daß es sich bei dem aromatischen Polyamid um ein Polymeres handelt, das die wiederkehrenden Stuktureinheiten der Formeln X und XI aufweist

$$-OC-Ar^1-CO-NH-Ar^4-NH- \quad (X),$$

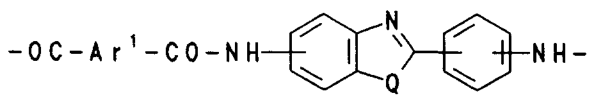

(XI),

worin $Ar^1$ die in Anspruch 1 definierte Bedeutung aufweist und $Ar^4$ und Q die in Anspruch 8 definierte Bedeutung aufweisen.

**17.** Fasern und Filme nach Anspruch 15, dadurch gekennzeichnet, daß es sich bei dem aromatischen Polyamid um ein Polymeres handelt, das die wiederkehrenden Stuktureinheiten der Formeln X und XII aufweist

$$-OC-Ar^1-CO-NH-Ar^4-NH- \quad (X),$$

$$-OC-Ar^1-CO-HN-Ar^5-X-Ar^6-NH- \quad (XI),$$

worin $Ar^1$ die in Anspruch 1 definierte Bedeutung aufweist und $Ar^4$, $Ar^6$ und X die in Anspruch 8 definierte Bedeutung aufweisen.

**18.** Fasern und Filme nach Anspruch 15, dadurch gekennzeichnet, daß es sich bei dem aromatischen Polyamid um ein Polymeres handelt, das die wiederkehrenden Stuktureinheiten der Formeln X, XII und XIII aufweist

$$-OC-Ar^1-CO-NH-Ar^4-NH- \quad (X),$$

$$-OC-Ar^1-CO-HN-Ar^5-X-Ar^6-NH- \quad (XII),$$

$$-OC-Ar^1-CO-HN-Ar^7-Y-Ar^8-NH- \quad (XII),$$

worin $Ar^1$ die in Anspruch 1 definierte Bedeutung aufweist und $Ar^4$, $Ar^5$, $Ar^6$, $Ar^7$, $Ar^8$, X und Y die in Anspruch 8 definierte Bedeutung aufweisen.

**19.** Fasern und Filme nach Anspruch 15, dadurch gekennzeichnet, daß es sich bei dem aromatischen Polyamid um ein Polymeres handelt, das die wiederkehrenden Stuktureinheiten der Formeln X, XI und XII aufweist

$$-OC-Ar^1-CO-NH-Ar^4-NH- \quad (X),$$

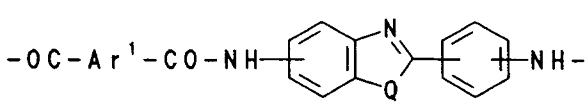

(XI),

$$-OC-Ar^1-CO-HN-Ar^5-X-Ar^6-NH- \quad (XII),$$

worin $Ar^1$ die in Anspruch 1 definierte Bedeutung aufweist und $Ar^4$, $Ar^5$, $Ar^6$, X und Q die in Anspruch 8 definierte Bedeutung aufweisen.